# EUROPEAN PATENT APPLICATION

(11) **EP 1 142 746 A2**
(43) Date of publication of application: **10.10.2001**
(21) Application number: 01108453.0
(22) Date of filing: 04.04.2001
(51) Int. Cl.: B60K 31/18, B62D 6/00, B62D 101/00

(54) **Vehicle steering assembly**

(30) Priority: 04.04.2000 IT BO000190
(71) Applicant: FERRARI S.p.A., 41100 Modena (IT)
(72) Inventor: Longhi Alberto, 44100 Ferrara (IT); Visconti Amedeo, 10138 Torino (IT)
(74) Representative: Cerbaro, Elena, Dr.

(57) **Abstract**

A vehicle steering assembly (1) having a steering wheel (2), a steering box (3), and a steering arm (5) mechanically connecting the steering wheel (2) to the steering box (3); the steering assembly (1) being characterized by having means (8, 9, 10) for selectively imparting angular vibrations of given amplitude and frequency to the steering arm (5) to attenuate or eliminate the angular vibrations which, in particular driving conditions, are transmitted from the steering box (3) to the steering wheel (2) via the steering arm (5), and/or to transmit driver-perceptible angular vibrations to the steering wheel (2) to inform the driver of a given driving condition.

## Description

The present invention relates to a vehicle steering assembly.

As is known, currently produced vehicle steering assemblies comprise a steering wheel, a steering box connected by links to the vehicle front suspension hubs, and a steering arm connecting the steering wheel mechanically to the steering box to enable the steering box to convert any angular displacement of the steering wheel into a corresponding rotation of the vehicle front suspension hubs.

To improve handling and comfort of the vehicle, most currently produced steering assemblies feature a hydraulic actuator built into the steering box and which, using the pressurized oil produced by a rotary pump powered by the vehicle engine, reduces the force exerted by the driver on the steering wheel to turn the front wheels of the vehicle.

In more advanced. steering assemblies, the assembly defined by the hydraulic actuator and rotary pump - known as hydraulic power steering - has been combined for some years now with an additional electric motor connected to the steering arm or directly to the steering box to regulate, as a function of speed, the force required of the driver on the steering wheel to turn the wheels of the vehicle.

Controlled by an electronic central control unit, the electric motor produces a torque varying in value and direction and which, added to the force produced by the hydraulic power steering system, regulates the force required of the driver on the steering wheel so as to increase the force required of the driver as vehicle speed increases.

Such a solution enables the hydraulic steering system to be so designed as to ensure an acceptable amount of effort at high vehicle speeds, while the electric motor is activated at low speeds to further reduce the force required of the driver on the steering wheel to turn the front wheels of the vehicle.

Though providing for easier, more precise handling of the vehicle, even the most sophisticated steering assemblies currently produced have the major drawback of transmitting to the steering wheel, over certain road surfaces, angular vibrations capable of seriously impairing inside-passenger-compartment comfort.

It is an object of the present invention to provide a vehicle steering assembly designed to eliminate the aforementioned drawback in a straightforward, low-cost manner.

According to the present invention, there is provided a vehicle steering assembly comprising a steering wheel, a steering box, and a steering arm mechanically connecting the steering wheel to said steering box; the steering assembly being characterized by comprising means for selectively imparting angular vibrations of given amplitude and frequency to the steering arm.

In a first preferred embodiment, the means for selectively imparting angular vibrations to the steering arm produce angular vibrations in phase opposition with, and in such a manner as to attenuate or eliminate, the angular oscillations which, in particular driving conditions, are transmitted from the steering box to the steering wheel via the steering arm.

In a further preferred embodiment, the means for selectively imparting angular vibrations to the steering arm produce, on command, angular vibrations of given amplitude and frequency, and which, on reaching the steering wheel, are perceptible by the driver; said means producing said vibrations under given driving conditions so as to alert the driver.

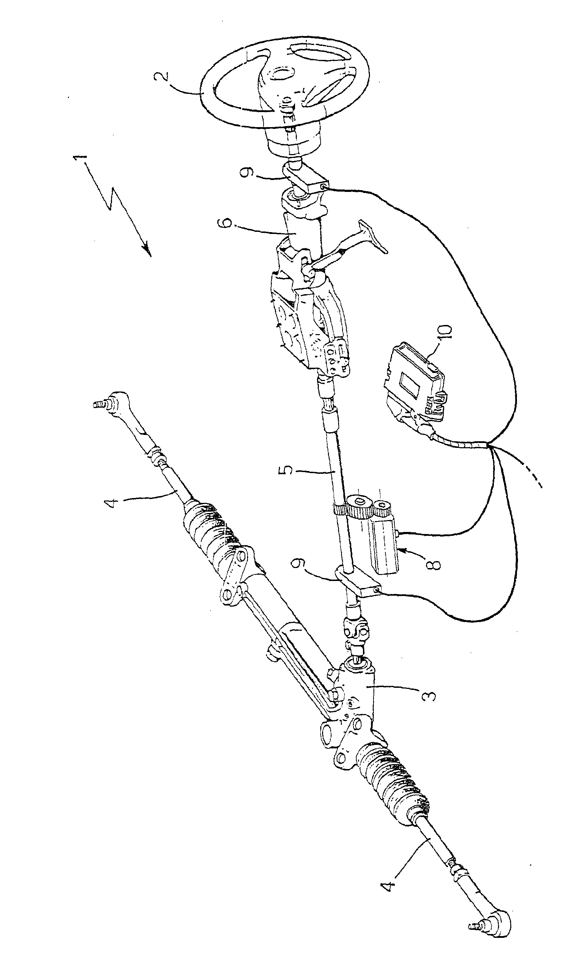

The present invention will be described with reference to the accompanying drawing, which shows, by way of example, a view in perspective, with parts removed for clarity, of a non-limiting embodiment.

Number 1 in the accompanying drawing indicates as a whole a vehicle steering assembly comprising a steering wheel 2; a steering box 3 connected by two links 4 to the vehicle front suspension hubs (not shown); and a steering arm 5 mechanically connecting steering wheel 2 to steering box 3 to enable the steering box to convert any angular displacement of the steering wheel into a corresponding rotation of the vehicle front suspension hubs.

Steering arm 5 is preferably, though not necessarily, divided into two or more portions connected by known mechanical joints; and at least one portion is mounted to rotate axially inside a sleeve 6 fixed to the vehicle frame. Sleeve 6 is an integral part of steering assembly 1, by supporting steering arm 5 and steering wheel 2 fixed to the end of arm 5, and is commonly known as the steering column.

Steering box 3 is of known type and preferably, though not necessarily, has an integrated hydraulic actuator (not shown) which, using the pressurized oil produced by a rotary pump (not shown) powered by the vehicle engine, reduces the force required of the driver on steering wheel 2 to turn the front wheels of the vehicle.

Steering assembly 1 also comprises means for selectively imparting angular vibrations of given amplitude and frequency to steering arm 5.

More specifically, in a first working condition, said means produce angular vibrations in phase opposition with, and in such a manner as to attenuate or eliminate, the angular oscillations which, in particular driving conditions, are transmitted from steering box 3 to steering wheel 2 via steering arm 5; and in a second working condition, the means selectively produce lowamplitude, high-frequency angular vibrations, which, on reaching steering wheel 2, are readily perceptible by the driver, but with no impairment in the handling of the vehicle.

More specifically, in the second working condition, the means for selectively imparting angular vibrations to steering arm 5 transmit a train of angular vibrations of given amplitude and frequency to steering wheel 2 to alert the driver to given driving conditions, such as the maximum traction of the vehicle being reached, a set reference speed being exceeded, a given transverse acceleration being reached, etc.

With reference to the accompanying drawing, in the example shown, the means for selectively imparting angular vibrations to steering arm 5 comprise: an electric actuator 8 connected mechanically to steering arm 5; one or more sensors 9 for detecting, instant by instant, the angular displacement of steering arm 5 with respect to a given reference; and an electronic central control unit 10 for controlling electric actuator 8 as a function of the signals from sensors 9 and possibly other sensors on the vehicle.

More specifically, electronic central control unit 10 controls electric actuator 8 as a function of the signals from sensors 9 to impart to steering arm 5 angular vibrations capable of compensating, and so eliminating, the angular vibrations or oscillations which, in particular driving conditions, are transmitted from steering box 3 to steering wheel 2 via steering arm 5. In particular driving conditions, electronic central control unit 10 also, or alternatively, controls electric actuator 8 to impart to steering arm 5 low-amplitude, high-frequency angular vibrations, which, on reaching steering wheel 2, are readily perceptible by the driver, but with no impairment in the handling of the vehicle.

In the example shown, electric actuator 8 is defined by an electric step motor or similar, connected mechanically to steering arm 5 by cascade gears; and sensors 9 are defined by two known encoders fitted to steering arm 5, one close to the joint normally connecting steering arm 5 to steering box 3, and the other close to the other end of the arm supporting steering wheel 2.

It should be point out that, since electric actuator 8 does not have to produce particularly high torques-its function, in fact, being that of generating on the arm angular oscillations of, experimentally, fairly low amplitude - a compact, lightweight, low-power step electric motor is sufficient.

Also, if provided with a mathematical model of the behaviour of steering arm 5, electronic central control unit 10 can control electric actuator 8 on the basis of signals from even only one sensor 9 along steering arm 5.

In a variation not shown, electric actuator 8 is defined by an electric motor of the type normally used in electric or electrohydraulic hybrid power steering devices. In which case, in addition to eliminating the angular vibrations transmitted from steering box 3 to steering wheel 2 via steering arm 5 and/or transmitting low-amplitude, high-frequency vibrations to steering wheel 2, electric actuator 8, controlled by electronic central control unit 10, also acts as a conventional power steering device, be it electric or electrohydraulic. Obviously, using an electric motor of the type normally used in electric or electrohydraulic hybrid power steering devices, it is also possible to regulate, as a function of speed, the force required of the driver on the steering wheel to turn the vehicle wheels.

Operation of steering assembly 1 is selfexplanatory.

The advantages of the assembly according to the present invention are obvious: firstly, it eliminates the angular vibrations or oscillations transmitted, in particular driving conditions, from steering box 3 to steering wheel 2 via steering arm 5, and which create serious problems for the driver; and, secondly, unlike currently used indicators on the instrument panel, it provides for alerting the driver of a given driving condition without distracting the driver's attention from the road.

Another advantage of steering assembly 1 is that the means for selectively imparting angular vibrations to steering arm 5 - i.e. electric actuator 8, the sensors, and electronic central control unit 10 - can be integrated easily, with no major structural alterations, into conventional steering assemblies with either electric or electrohydraulic power steering devices.

Clearly, changes may be made to steering assembly 1 as described and illustrated herein without, however, departing from the scope of the present invention. In particular, in an alternative embodiment of steering assembly 1, sensor/s 9 for detecting the position of steering arm 5 may be replaced with torque sensors for detecting, instant by instant, the torque transmitted via steering arm 5.

## Claims

1. A vehicle steering assembly (1) comprising a steering wheel (2), a steering box (3), and a steering arm (5) mechanically connecting the steering wheel (2) to said steering box (3); the steering assembly (1) being **characterized by** comprising means (8, 9, 10) for selectively imparting angular vibrations of given amplitude and frequency to the steering arm (5).

2. A steering assembly as claimed in Claim 1, **characterized in that** said means (8, 9, 10) for selectively imparting angular vibrations of given amplitude and frequency to the steering arm (5) produce angular vibrations in phase opposition with, and in such a manner as to attenuate or eliminate, the angular oscillations which, in particular driving conditions, are transmitted from the steering box (3) to the steering wheel (2) via the steering arm (5).

3. A steering assembly as claimed in Claim 1 or 2, **characterized in that** said means (8, 9, 10) for selectively imparting angular vibrations to the steering arm (5) produce, on command, angular vibrations of given amplitude and frequency, and which, on reaching the steering wheel (2), are perceptible by the driver; said means (8, 9, 10) producing said vibrations under given driving conditions so as to alert the driver.

4. A steering assembly as claimed in Claim 2 or 3, **characterized in that** said means (8, 9, 10) for selectively imparting angular vibrations to the steering arm (5) comprise an electric actuator (8) connected mechanically to said steering arm (5); at least one sensor (9) connected to the steering arm (5); and an electronic central control unit (10) for controlling the electric actuator (8) as a function of signals from said at least one sensor (9).

5. A steering assembly as claimed in Claim 4, **characterized in that** said at least one sensor (9) detects, instant by instant, the angular displacement of the steering arm (5) with respect to a given reference.

6. A steering assembly as claimed in Claim 4, **characterized in that** said at least one sensor (9) detects, instant by instant, the torque transmitted via said steering arm (5).

7. A steering assembly as claimed in Claim 4, 5 or 6, **characterized in that** said electric actuator (8) is defined by an electric step motor or similar.

8. A steering assembly as claimed in Claim 4, 5 or 6, **characterized in that** said electric actuator (8) is defined by an electric motor of the type normally used in electric or electrohydraulic hybrid power steering devices; the electric actuator (8), under control of the electronic central control unit (10), reducing the force required of the driver on the steering wheel (2) to turn the wheels of the vehicle.

9. A steering assembly as claimed in any one of the foregoing Claims, **characterized in that** said steering box (3) has an integrated hydraulic actuator which, using a pressurized fluid, reduces the force required of the driver on the steering wheel (2) to turn the wheels of the vehicle.
